# EUROPÄISCHE PATENTSCHRIFT

(11) **EP 1 065 102 B1**
(45) Veröffentlichungstag und Bekanntmachung des Hinweises auf die Patenterteilung: **24.09.2003**
(21) Anmeldenummer: 00111844.7
(22) Anmeldetag: 07.06.2000
(51) Int. Cl.: B60R 5/04, B60R 21/06

(54) **Laderaumabtrennung**
Luggage compartment cover
Couvercle pour le compartiment à bagages

(30) Priorität: 01.07.1999 DE 19930136
(43) Veröffentlichungstag der Anmeldung: 03.01.2001
(73) Patentinhaber: BOS GmbH & Co. KG, 73773 Aichwald (DE)
(72) Erfinder: Ehrenberger, Marina, 73730 Esslingen (DE); Seel, Holger, 71134 Aidlingen (DE)
(74) Vertreter: Patentanwälte Ruff, Wilhelm, Beier, Dauster & Partner

(56) Entgegenhaltungen:
- DE-C- 4 239 472
- FR-A- 2 759 956
- PATENT ABSTRACTS OF JAPAN vol. 1997, no. 07, 31. Juli 1997 (1997-07-31) & JP 09 086279 A (KASAI KOGYO CO LTD;NHK SPRING CO LTD), 31. März 1997 (1997-03-31)

## Beschreibung

Die Erfindung betrifft eine Laderaumabtrennung mit einem ausziehbaren, flexiblen Flächengebilde, das an einem rückseitigen Stirnende an einer Rollowelle gehalten und an einem frontseitigen Stirnende mit einer Auszugleiste versehen ist, die sich über die gesamte Breite des Flächengebildes erstreckt, wobei die Auszugsleiste Formschlüssig in einem Hohlkammerbereich eines sich wenigstens über die Breite des Flächengebildes erstreckenden Abdeckprofiles integriert ist.

Die als nächstkommender Stand der Technik anzusehende FR 2 759 956 zeigt eine Trenneinrichtung, bei der ein Sicherheitsnetz in einem Endbereich mit seinen Maschen auf eine Auszugsstange aufgefädelt oder um die Auszugsstange geschlungen und vernäht ist. Zur Sicherung des Sicherheitsnetzes auf der Auszugsstange ist ein geschlitztes Abdeckrohr vorgesehen, das die Auszugsstange umgreift. Das Abdeckrohr weist an stirnseitig gegenüberliegenden Enden Stopfen auf, die mit einem Zapfen zum Einhängen in fahrzeugfesten Halterungen versehen sind.

Weitere Laderaumabtrennungen sind insbesondere als Trenn-Netze für Kombi-Personenkraftwagen allgemein bekannt. Ein solches Trenn-Netz ist als flexibles Flächengebilde an einer Rollowelle gehalten und auf diese Rollowelle durch eine entsprechende Drehung der Rollowelle aufwickelbar. Die Rollowelle ist in einem fahrzeugfest positionierten Kassettengehäuse angeordnet, aus dem das Trenn-Netz nach oben ausziehbar ist. Zum Ausziehen des Trenn-Netzes weist das Trenn-Netz im Bereich seines frontseitigen Stirnendes eine Auszugleiste auf, die sich über die gesamte Breite des Trenn-Netzes erstreckt und die seitlich mit Einhängeelementen zur Festlegung der Auszugleiste in dachseitigen, fahrzeugfesten Halterungen versehen ist. Im eingezogenen Zustand des Trenn-Netzes liegt die Auszugleiste auf Höhe eines entsprechenden Längsschlitzes auf dem Kassettengehäuse auf. Die Auszugleiste ist in einer Tasche an der Stirnseite des Trenn-Netzes angeordnet, die durch ein Umschlagen des Stirnenden des Trenn-Netzes und ein entsprechendes Vernähen, gegebenenfalls unter Zuhilfenahme eines zusätzlichen Verstärkungsmaterials, gebildet ist.

Aufgabe der Erfindung ist es, eine Laderaumabtrennung der eingangs genannten Art zu schaffen, die eine verbesserte Gestaltung des frontseitigen Stirnendes des Flächengebildes ermöglicht.

Diese Aufgabe wird dadurch gelöst, dass das Abdeckprofil einen G-artigen Querschnitt aufweist. Das Abdeckprofil weist über seine gesamte Länge durchgehend einen Hohlkammerbereich auf, der zu seinen gegenüberliegenden Stirnenden hin offen ist. Außerdem ist der Hohlkammerbereich über sein gesamte Länge durch einen labyrinthartigen Längsschlitz nach unten offen.

In Ausgestaltung der Erfindung ist der Hohlkammerbereich mit einem länglichen Hohlquerschnitt versehen, der an die länglichen, ovalen Abmessungen der Auszugleiste angepasst ist.

In weiterer Ausgestaltung der Erfindung ist die Auszugsleiste um einen um nahezu 180° umgelenkten Winkel umgeschlagen und durch einen innenliegenden Schenkel des Abdeckprofiles formschlüssig gegen ein Herausziehen in Zugrichtung des Flächengebildes nach unten gestützt.

In weiterer Ausgestaltung der Erfindung ist ein Längsschlitz des Abdeckprofiles in seiner Breite geringer als die Dicke der Auszugsleiste. Hierdurch ist ein zusätzlicher Rückhalt für die Auszugsleiste in dem Abdeckprofil gebildet.

Dabei ist die Auszugleiste formschlüssig in einem Hohlkammerbereich eines sich wenigstens über die Breite des Flächengebildes erstreckenden Abdeckprofiles integriert . Die Auszugleiste ist somit verdeckt, d.h. unsichtbar innerhalb des Abdeckprofiles untergebracht. Das Abdeckprofil kann in seinem optischen Erscheinungsbild an die Inneneinrichtung des Kraftfahrzeugs angepaßt sein oder sich einheitlich in das äußere Bild eines Kassettengehäuses der Laderaumabtrennung einfügen. Das frontseitige Stirnende des Flächengebildes erhält dadurch eine wesentlich verbesserte, vereinheitlichte optische Gestaltung. Durch die formschlüssige Aufnahme der Auszugleiste in dem Abdeckprofil wird gewährleistet, daß auch in einem Crashfall ein Lösen der Auszugleiste aus dem Abdeckprofil heraus verhindert wird. Die formschlüssige Anordnung ist somit auf die Zugrichtung des Flächengebildes bezogen. Da die Auszugleiste in einem frontseitigen Stirnende des Flächengebildes in dem Abdeckprofil unsichtbar integriert ist, müssen an die Verbindung des Flächengebildes mit der Auszugleiste keine allzu hohen optischen Anforderungen gestellt werden. Eine funktional sichere Verbindung ist ausreichend.

In Ausgestaltung der Erfindung weist der Hohlkammerbereich des Abdeckprofiles über seine gesamte Länge durchgängig den gleichen Querschnitt auf und ist zu beiden Stirnseiten hin offen gestaltet. Dabei kann das Hohlpofil insgesamt als Hohlprofil oder aber lediglich mit einem nutförmigen Hohlkammerbereich und im übrigen als Vollprofil gestaltet sein. Die durchgängig gleichbleibende Gestaltung des Abdeckprofiles ermöglicht den Einsatz eines endlosen Strangpreßprofiles. Das Abdeckprofil ist vorzugsweise aus Kunststoff oder aus einer Leichtmetall-Legierung hergestellt.

In weiterer Ausgestaltung der Erfindung ist der Hohlkammerbereich mit einem über seine Länge durchgehenden, nach außen offenen Längsschlitz versehen, dessen Breite geringer ist als eine Querschnittsabmessung der Auszugleiste. Dieser Längsschlitz dient dazu, das Hindurchtreten des flexiblen Flächengebildes, insbesondere des Trenn-Netzes, zu gewährleisten. Vorzugsweise wird die Auszugleiste in ihrem bereits mit dem Trenn-Netz verbundenen Zustand zusammen mit dem Trenn-Netz von einer Stirnseite her in den Hohlkammerbereich des Abdeckprofiles eingeschoben, wodurch bereits die sichere Positionierung der Auszugleiste in Zugrichtung des Flächengebildes, d.h. in Zugrichtung des Trenn-Netzes, gewährleistet ist.

In weiterer Ausgestaltung der Erfindung ist den gegenüberliegenden Stirnseiten des Abdeckprofiles jeweils eine Schließblende zugeordnet, die den Hohlkammerbereich verschließt. Die Schließblende kann sich entweder lediglich über den Hohlkammerbereich oder aber über den gesamten Querschnitt des Abdeckprofiles erstrecken. Der optische Gesamteindruck des Abdeckprofiles wird durch diese Schließblenden weiter verbessert.

In weiterer Ausgestaltung der Erfindung ragt die Auszugleiste beidseitig über die Stirnenden des Abdeckprofiles hinaus und ist mit Einhängeelementen für eine Festlegung in fahrzeugfesten Halterungen versehen. Dies ist eine besonders einfache und funktionssichere Ausgestaltung, wobei je nach Gestaltung der Einhängeelemente ein nachträgliches Anbringen an den Stirnenden der Auszugleiste nach dem Einschieben der Auszugleiste in das Abdeckprofil vorgesehen werden muß.

In weiterer Ausgestaltung der Erfindung ist das Abdeckprofil an seinen gegenüberliegenden Stirnenden mit Einhängeelementen für eine Festlegung in fahrzeugfesten Halterungen versehen. Entsprechende Einhängeelemente an der Auszugleiste sind dadurch nicht notwendig.

In weiterer Ausgestaltung der Erfindung sind die Einhängeelemente an den Schließblenden vorgesehen. Bei dieser Ausgestaltung muß gewährleistet sein, daß die Schließblenden an den Stirnenden des Abdeckprofiles derart sicher verankert sind, daß auch in einem Crashfall ein Lösen der Schließblenden von dem Abdeckprofil vermieden wird.

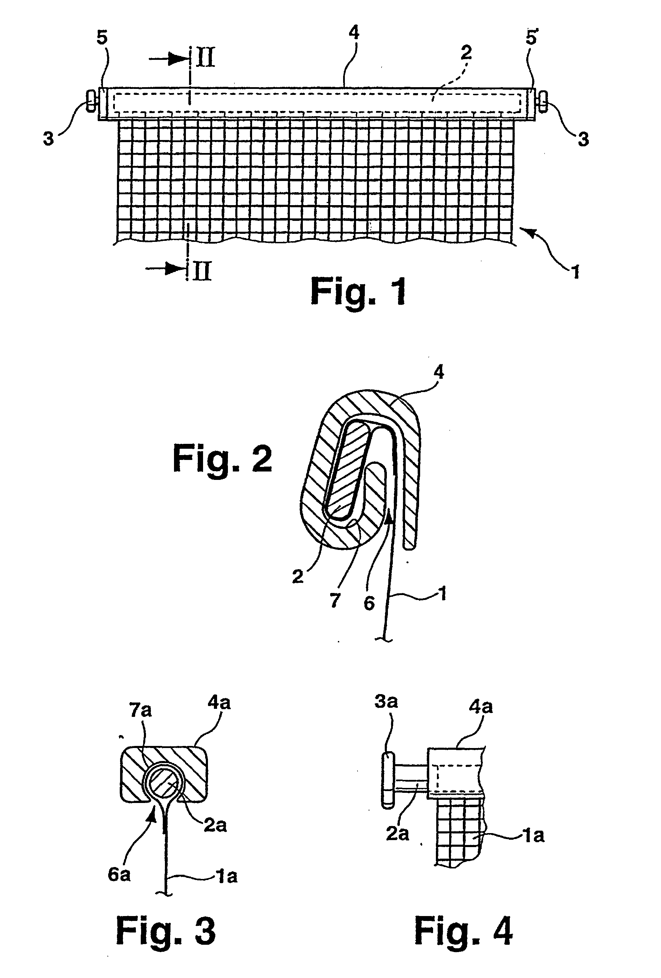

Weitere Vorteile und Merkmale der Erfindung ergeben sich aus den Ansprüchen. Nachfolgend ist eine bevorzugte Ausführungsform der Erfindung anhand der Figuren 1 und 2 dargestellt.
- Fig. 1: zeigt in einer Frontansicht einen oberen Teil einer Ausführungsform einer erfindungsgemäßen Laderaumabtrennung für ein Kraftfahrzeug,
- Fig. 2: einen Querschnitt durch die Laderaumabtrennung nach Fig. 1 im Bereich eines frontseitigen Stirnendes entlang der Schnittlinie II-II in Fig. 1,
- Fig. 3: schematisch einen Querschnitt im Bereich eines Abdeckprofiles und einer Auszugleiste einer nicht zur Erfindung gehörenden Laderaumabtrennung und
- Fig. 4: in einer Frontansicht einen Ausschnitt eines Seitenbereiches der nicht zur Erfindung gehörenden Laderaumabtrennung nach Fig. 3.

Eine Laderaumabtrennung für einen Kombi-Personenkraftwagen weist als flexibles Flächengebilde ein Trenn-Netz 1 auf, das in nicht näher dargestellter, weil bekannter Weise auf einer Rollowelle auf- und abwickelbar gehalten ist. Die Rollowelle ist in fahrzeugfesten Halterungen drehbar gelagert, wobei alternativ die Rollowelle entweder direkt mittels entsprechender Seitenteile in den fahrzeugfesten Halterungen oder indirekt durch die Integration in einem Gehäuse, vorzugsweise in einem Kassettengehäuse, angeordnet ist. An einem frontseitigen Stirnende des Trenn-Netzes 1 ist eine Auszugleiste 2 vorgesehen, die beim Ausführungsbeispiel nach den Fig. 1 und 2 einen länglichen, nahezu ovalen Querschnitt aufweist. Die Auszugleiste 2 ist in einer Tasche des frontseitigen Stirnendes des Trenn-Netzes 1 eingebettet, die durch ein Umschlagen des Stirnbereiches des Trenn-Netzes 1 und eine flächige Verbindung des stirnseitigen Randes mit einem weiter innenliegenden Teilbereich des Trenn-Netzes, insbesondere durch ein Vernähen, geschaffen ist. Die Auszugleiste 2 ist in einem Abdeckprofil 4 integriert, das als Hohlprofil mit einem G-artigen Querschnitt versehen ist. Das Abdeckprofil 4 weist über seine gesamte Länge durchgehend einen Hohlkammerbereich 7 auf, der zu seinen gegenüberliegenden Stirnenden hin offen ist. Außerdem ist der Hohlkammerbereich 7 über seine gesamte Länge durch einen labyrinthartigen Längsschlitz 6 nach unten offen. Der Hohlkammerbereich 7 ist mit einem länglichen Hohlquerschnitt versehen, der an die länglichen, ovalen Abmessungen der Auszugleiste 2 angepaßt ist. Die Auszugleiste 2 ist in ihrem in die Tasche des Trenn-Netzes 1 eingebetteten Zustand samt Trenn-Netz 1 von einer Stirnseite her in den Hohlkammerbereich 7 des Abdeckprofiles 4 eingeschoben, wobei das Trenn-Netz durch den Längsschlitz 6 hindurch nach unten herausgeführt ist. Die Auszugleiste 2 ist in dem Hohlkammerbereich 7 um einen um nahezu 180° umgelenkten Winkel umgeschlagen und durch einen innenliegenden Schenkel des Abdeckprofiles 4 formschlüssig gegen ein Herausziehen in Zugrichtung des Trenn-Netzes 1 nach unten gestützt. Außerdem ist auch der Längsschlitz 6 in seiner Breite geringer als die Dicke der Auszugleiste 2, so daß hierdurch ein zusätzlicher Rückhalt für die Auszugleiste 2 in dem Abdeckprofil 4 gebildet ist. Das Abdeckprofil 4 weist eine Länge auf, die geringfügig größer ist als die Länge der Auszugleiste 2 und damit auch größer als die Breite des Trenn-Netzes 1. Nach dem Einschieben der Auszugleiste 2 und des Trenn-Netzes 1 werden die gegenüberliegenden Stirnseiten des Abdeckprofiles 4 durch Schließblenden 5 verschlossen, die lösbar oder unlösbar in den Stirnenden oder auf den Stirnenden des Abdeckprofiles 4 festgelegt sind. Die Schließblenden 5 tragen an ihren Außenseiten jeweils ein Einhängeelement, um das Abdeckprofil 4 einschließlich Trenn-Netz 1 und Auszugleiste 2 in fahrzeugfesten Halterungen im Dachbereich des Kombi-Personenkraftwagens im ausgezogenen Funktionszustand festzulegen. In diesem Funktionszustand ragt das Trenn-Netz 1 etwa vertikal nach oben und trennt einen Fahrgastraum von einem Laderaum des Kombi-Personenkraftwagens.

In gleicher Weise kann die anhand der Fig. 1 und 2 beschriebene Laderaumabtrennung auch bei anderen Kraftfahrzeugen eingesetzt werden. Das Abdeckprofil 4 kann aus Kunststoff oder aus einer Leichtmetalllegierung hergestellt sein und von der optischen Gestaltung, Form- und Farbgebung her an die Inneneinrichtung des Kraftfahrzeugs oder an das äußere Erscheinungsbild eines entsprechenden Kassettengehäuses für die Rollowelle angepaßt sein. Zur Inneneinrichtung zählen Verkleidungsteile, Sitzanordnungen, Bezüge und ähnliches.

Beim nicht zur Erfindung gehörenden Ausführungsbeispiel nach den Fig. 3 und 4 ist einem Trenn-Netz 1a, in dessen frontseitigem Stirnbereich eine Auszugleiste 2a analog zum Ausführungsbeispiel nach den Fig. 1 und 2 eingebettet ist, ein Abdeckprofil 4a zugeordnet, das eine zu dem Abdeckprofil 4 nach den Fig. 1 und 2 unterschiedliche Form aufweist. Das Abdeckprofil 4a weist einen nahezu rechteckigen Querschnitt auf, in dem eine kanalartige, nach unten offene Nut als Hohlkammerbereich 7a vorgesehen ist. Auch der durch die Nut gebildete Hohlkammerbereich 7a ist zu den gegenüberliegendern Stirnseiten des Abdeckprofiles 4a hin offen gestaltet, um ein seitliches Einschieben der Auszugleiste 2a einschließlich des umgeschlagenen Stirnbereiches des Trenn-Netzes 1a zu ermöglichen. Die Auszugleiste 2a weist einen kreisförmigen Querschnitt auf. Der Hohlkammerbereich 7a ist entsprechend angepaßt und weist ebenfalls einen kreisartigen Querschnitt auf. Der Hohlkammerbereich 7a ist nach unten über seine gesamte Länge durchgehend mittels eines Längsschlitzes 6a offen gestaltet. Die Breite des Längsschlitzes ist geringer als der Durchmesser der Auszugleiste 2a.

Beim nicht zur Erfindung gehörenden Ausführungsbeispiel nach den Fig. 3 und 4 ragt die Auszugleiste 2a über die Stirnseiten des Abdeckprofiles 4a beidseitig hinaus und ist an ihren Stirnenden mit kopfartigen Einhängeelementen 3a zur direkten Festlegung in entsprechenden fahrzeugfesten Halterungen versehen. Im Gegensatz zum Ausführungsbeispiel nach den Fig. 1 und 2 sind die Einhängeelemente 3a somit direkt an der Auszugleiste 2a und nicht am Abdeckprofil 4a oder an entsprechenden Schließblenden vorgesehen. Um ein seitliches Einschieben der Auszugleiste 2a in das Abdeckprofil 4a zu ermöglichen, sind die Einhängeelemente 3a vorzugsweise nachträglich mit den Stirnenden in der Auszugleiste 2a verbindbar. Die kopfartigen Einhängeelemente 3a können insbesondere in die Stirnenden der Auszugleiste 2a eingeschraubt werden, nachdem die Auszugleiste 2a in das Abdeckprofil 4a eingeschoben wurde.

## Patentansprüche

1. Laderaumabtrennung mit einem ausziehbaren, flexiblen Flächengebilde, das an einem rückseitigen Stirnende an einer Rollowelle gehalten und an einem frontseitigen Stirnende mit einer Auszugsleiste versehen ist, die sich über die gesamte Breite des Flächengebildes erstreckt, wobei die Auszugsleiste (2) formschlüssig in einem Hohlkammerbereich (7) eines sich wenigstens über die Breite des Flächengebildes (1) erstreckenden Abdeckprofiles (4) integriert ist, **dadurch gekennzeichnet, dass** das Abdeckprofil (4) einen G-artigen Querschnitt aufweist.

2. Laderaumabtrennung nach Anspruch 1, **dadurch gekennzeichnet, dass** der Hohlkammerbereich (7) mit einem länglichen Hohlquerschnitt versehen ist, der an die länglichen, ovalen Abmessungen der Auszugleiste (2) angepasst ist.

3. Laderaumabtrennung nach Anspruch 2, **dadurch gekennzeichnet, dass** die Auszugsleiste (2) um einen um nahezu 180° umgelenkten Winkel umgeschlagen und durch einen innenliegenden Schenkel des Abdeckprofiles (4) formschlüssig gegen ein Herausziehen in Zugrichtung des Flächengebildes (1) nach unten gestützt ist.

4. Laderaumabtrennung nach Anspruch 3, **dadurch gekennzeichnet, dass** ein Längsschlitz (6) des Abdeckprofiles (4) in seiner Breite geringer als die Dicke der Auszugsleiste (2) ist.

5. Laderaumabtrennung nach Anspruch 1, **dadurch gekennzeichnet, daß** der Hohlkammerbereich (7) des Abdeckprofiles (4) über seine gesamte Länge durchgängig den gleichen Querschnitt aufweist und zu beiden Stirnseiten hin offen gestaltet ist.

6. Laderaumabtrennung nach Anspruch 1 oder 5, **dadurch gekennzeichnet, daß** der Hohlkammerbereich (7) mit einem über seine Länge durchgehenden, nach außen offenen Längsschlitz (6) versehen ist, dessen Breite geringer ist als eine Querschnittsabmessung der Auszugleiste (2).

7. Laderaumabtrennung nach einem der vorhergehenden Ansprüche, **dadurch gekennzeichnet, daß** den gegenüberliegenden Stirnseiten des Abdeckprofiles (4) jeweils eine Schließblende (5) zugeordnet ist, die den Hohlkammerbereich (7) verschließt.

8. Laderaumabtrennung nach einem der vorhergehenden Ansprüche, **dadurch gekennzeichnet, daß** die Auszugleiste beidseitig über die Stirnenden des Abdeckprofiles hinausragt und mit Einhängeelementen für eine Festlegung in fahrzeugfesten Halterungen versehen ist.

9. Laderaumabtrennung nach einem der vorhergehenden Ansprüche, **dadurch gekennzeichnet, daß** das Abdeckprofil an seinen gegenüberliegenden Stirnenden mit Einhängeelementen für eine Festlegung in fahrzeugfesten Halterungen versehen ist.

10. Laderaumabtrennung nach Anspruch 7, **dadurch gekennzeichnet, daß** die Einhängeelemente (3) an den Schließblenden (5) vorgesehen sind.

## Claims

1. Storage space partition having an extendable, flexible web which is held, at a rear end face, on a blind-type roller and which is provided, at a front end face, with a pull-out rail which extends over the entire width of the web, the pull-out rail (2) being integrated in a positive-locking manner in a hollow chamber region (7) of a covering profile-section (4) which extends at least over the width of the web (1),
**characterised in that** the covering profile-section (4) has a G-shaped cross-section.

2. Storage space partition according to claim 1,
**characterised in that** the hollow chamber region (7) is provided with an elongate, hollow cross-section which is adapted to the elongate, oval dimensions of the pull-out rail (2).

3. Storage space partition according to claim 2,
**characterised in that** the pull-out rail (2) is bent over through an angle which is redirected through almost 180° and is supported downwards by means of an inner member of the covering profile-section (4) in a positive-locking manner against withdrawal in the direction in which the web (1) is pulled.

4. Storage space partition according to claim 3,
**characterised in that** an elongate slot (6) of the covering profile-section (4) is smaller, in terms of the width thereof, than the thickness of the pull-out rail (2).

5. Storage space partition according to claim 1,
**characterised in that** the hollow chamber region (7) of the covering profile-section (4) has, over the entire length thereof, the same cross-section throughout and is constructed so as to be open towards both end faces.

6. Storage space partition according to claim 1 or claim 5,
**characterised in that** the hollow chamber region (7) is provided with an elongate slot (6), which extends over the length thereof and which is open outwards and whose width is less than a cross-sectional dimension of the pull-out rail (2).

7. Storage space partition according to any one of the preceding claims, **characterised in that** a closing stop (5) is associated with each of the opposing end faces of the covering profile-section (4), which stop (5) closes the hollow chamber region (7).

8. Storage space partition according to any one of the preceding claims, **characterised in that** the pull-out rail protrudes, at both sides, beyond the end faces of the covering profile-section and is provided with suspension elements for being fixed in holding devices which are fixed to a vehicle.

9. Storage space partition according to any one of the preceding claims, **characterised in that** the covering profile-section is provided, at the opposing end faces thereof, with suspension elements for being fixed in holding devices which are fixed to a vehicle.

10. Storage space partition according to claim 7,
**characterised in that** the suspension elements (3) are provided on the closing stops (5).

## Revendications

1. Cloisonnement pour compartiment à bagages, comportant une structure plane et flexible pouvant être déployée, qui est retenue sur un arbre enrouleur de store par une extrémité postérieure et est munie, à une extrémité antérieure, d'une barrette d'extraction s'étendant sur toute la largeur de ladite structure plane, ladite barrette d'extraction (2) étant intégrée, par concordance de formes, dans une région (7) matérialisant une cavité d'un profilé de recouvrement (4) s'étendant au moins sur la largeur de la structure plane (1), **caractérisé par le fait que** ledit profilé de recouvrement (4) possède une section transversale configurée en G.

2. Cloisonnement pour compartiment à bagages, selon la revendication 1, **caractérisé par le fait que** la région (7) matérialisant une cavité est dotée d'une section transversale creuse allongée, adaptée aux dimensions longilignes ovalisées de la barrette d'extraction (2).

3. Cloisonnement pour compartiment à bagages, selon la revendication 2, **caractérisé par le fait que** la barrette d'extraction (2) est rabattue d'un angle d'approximativement 180° et prend appui vers le bas par concordance de formes, au moyen d'une branche du profilé de recouvrement (4) située à l'intérieur, d'une manière interdisant un déploiement dans la direction de traction de la structure plane (1).

4. Cloisonnement pour compartiment à bagages, selon la revendication 3, **caractérisé par le fait qu'**une fente longitudinale (6) du profilé de recouvrement (4) est d'une largeur moindre que l'épaisseur de la barrette d'extraction (2).

5. Cloisonnement pour compartiment à bagages, selon la revendication 1, **caractérisé par le fait que** la région (7) matérialisant une cavité du profilé de recouvrement (4) présente la même section transversale d'un bout à l'autre de sa longueur totale, et est de configuration ouverte en direction des deux faces frontales.

6. Cloisonnement pour compartiment à bagages, selon la revendication 1 ou 5, **caractérisé par le fait que** la région (7) matérialisant une cavité est pourvue d'une fente longitudinale (6) qui est continue d'un bout à l'autre de sa longueur, est ouverte vers l'extérieur, et dont la largeur est plus petite qu'une dimension de section transversale de la barrette d'extraction (2).

7. Cloisonnement pour compartiment à bagages, selon l'une des revendications précédentes, **caractérisé par le fait qu'**un cache d'obturation (5), respectivement associé aux faces frontales opposées du profilé de recouvrement (4), obture la région (7) matérialisant une cavité.

8. Cloisonnement pour compartiment à bagages, selon l'une des revendications précédentes, **caractérisé par le fait que** la barrette d'extraction fait saillie de part et d'autre au-delà des extrémités frontales du profilé de recouvrement, et est munie d'éléments de suspension en vue d'une consignation à demeure dans des supports assujettis à un véhicule.

9. Cloisonnement pour compartiment à bagages, selon l'une des revendications précédentes, **caractérisé par le fait que** le profilé de recouvrement est muni, à ses extrémités frontales opposées, d'éléments de suspension en vue d'une consignation à demeure dans des supports assujettis au véhicule.

10. Cloisonnement pour compartiment à bagages, selon la revendication 7, **caractérisé par le fait que** les éléments de suspension (3) sont prévus sur les caches d'obturation (5).
